# EUROPEAN PATENT APPLICATION

(11) **EP 1 160 149 A2**
(43) Date of publication of application: **05.12.2001**
(21) Application number: 01111208.3
(22) Date of filing: 14.05.2001
(51) Int. Cl.: B62J 6/00

(54) **Flashing light for bicycles**

(30) Priority: 30.05.2000 IT MI001190
(71) Applicant: Giavani, Cesare, 28922 Pallanza (VB) (IT); Arsura, Ugo, 28100 Novara (IT)
(72) Inventor: Arsura, Ugo, 28100 Novara (IT)
(74) Representative: Trupiano, Federica

(57) **Abstract**

Flashing light for bicycles, provided with fastening means on the handgrip of the handlebar of the bicycle, with projecting and visible luminous part (1); said indicator comprises a flexible element (25) for fixing, positioned at the end of which is the luminous part projecting from the handgrip beyond the contour of the cyclist, fixed on a rotating ring nut (23) with the function of fastening to the handgrip of the handlebar, and the function of rotating control to switch on and off the lamp. Said indicator also comprises suitable electric power supply means, positioned inside the handgrip of the handlebar.

## Description

The present invention relates to a flashing light (luminous direction indicator), particularly suitable to be used on bicycles.

Prior art direction indicators, such as the type normally used in the motorcycle sector, are too cumbersome and require an electrical power supply system that makes them unsuitable for use on bicycles. In this way, the only way the cyclist can indicate direction is to extend an arm towards the inside of the bend to be taken, with the risk that this movement, accompanied by the release of his grip of the handlebar, may compromise the balance and stability of the vehicle.

The main object of the present invention is to provide a device suitable to indicate the direction by means of a flashing luminous signal, with a limited overall dimension and provided with autonomous power supply, so as to be efficaciously utilizable on a bicycle.

These and other objects and relevant advantages are attained with the flashing light for bicycles and with the bicycle in claims 1 and 14. Further characteristics of the invention shall become apparent in the remaining claims.

Thanks to the device of the invention, the cyclist too is given the possibility of indicating direction, without requiring to release his grip on the handlebar and lose his balance, with the risk of falling, in order to extend his arm outwards.

These and other objects, advantages and characteristics are indicated in the description below of a preferred embodiment of the luminous indicator and the bicycle of the present invention shown, as a non-limiting example, in the annexed figures of the drawings, in which:
figure 1 shows a plan view of the handlebar of a bicycle provided with the indicator device according to a preferred embodiment of the present invention;
figure 2 shows a detail of the flexible container for batteries or similar housed inside the handgrip of the handlebar;
figure 3a shows a cross-section of the assembly of the supporting systems present in the indicator device shown in figure 1;
figure 3b shows a cross section of the assembly of supporting systems according to an alternative embodiment of the present invention;
figure 4 shows a front view of the detail of one of the supports in figure 3;
figure 5 shows the electric circuit used in the indicator shown in figure 1;
figures 6a and 6b show the switching device of the indicator in figure 3b, with the circuit closed and open respectively.

The indicator of the invention shown in the aforesaid figures is advantageously composed of two ring nuts placed beside each other coaxially 8 and 23, the first of which comprises means for fixing to the end of the handgrip 24 of the handlebar 9, while the other comprises means for supporting the flexible element 25, positioned at the end of which is the part 1 with the flashing light which projects beyond the contour of the cyclist.

In detail the ring nut 8 for fixing to the handlebar has a hole 27 or a cylindrical element 40 for fitting the handgrip of the handlebar.

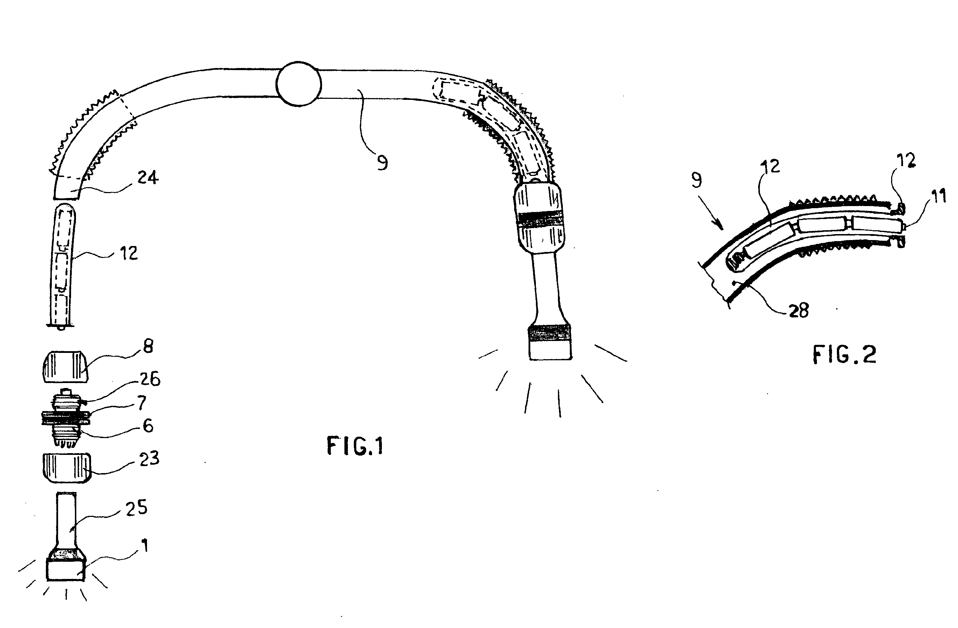

According to a preferred embodiment, shown in figure 1 the ring nut 8 is provided with a thread, screwed onto which is a fixed support 7, equipped with a corresponding thread 26. Contained inside the ring nut 8 is an elastic ring 10 which is deformed through clamping to fix the ring nut 8 with pressure on the aforesaid handgrip of the handlebar.

The indicator of the invention also comprises a container in the form of a flexible metal braid 12, inside which the batteries 11 or similar are housed. Fitted coaxially on a rigid metal tube 13 are a rotating support 6 and the aforesaid support 7 to fix to the handgrip of the handlebar. The rotating support 6 is provided with a groove 15 and a contact 19, rubbing on the tube 13.

The fixed support 7 is provided with a pin 14 positioned so as to be housed in the groove 15 of the rotating support 6, thus setting the angle of rotation α. The support 7 is also provided with a fixed contact 20, the function of which is to actuate electric continuity in the supply circuit of the lamp 29, in the position in which this contact is fixed in position facing the rubbing contact 19 of the rotating support 6. This position of electric continuity corresponds to one of the limit positions of free rotation permitted by the aforesaid groove 15 of the rotating support 6.

In turn, the fixed contact 20 positioned on the respective support 7 is provided with an elastic conducting element of the rubbing type 21, which guarantees electric continuity to the metal structure of the aforesaid metal braid 12 containing the batteries 11. The tube 13 thus performs the structural function of coaxial coupling of the two fixed 7 and rotating 6 supports, and of conductor guaranteeing negative electric continuity between the rubbing contact 19 of the rotating support 6 and one polarity of the lamp 29.

A second conductor 3 passes inside this tube to connect the other polarity of the lamp to the positive polarity of the batteries 11. This second conductor provides permanent electric continuity to the positive polarity, by means of a conductor terminal 17 appropriately insulated by the metal tube 13 and which rubs on the positive pole of the batteries.

The system described is finally completed by a support 2 for the lamp 29, by the conductor 5 that connects the metal tube 13 to the contact 4 of the lamp 29, by the elastic contact 18 (or rather connected inside) of the tube 13, by two insulating washers 16 and 22 located on the aforesaid terminal of the rubbing conductor 17 on which the positive polarity of the batteries (or similar) 11 presses; these are housed inside the metal braid 12 in turn fitted in the seat 28 of the handgrip 24 of the handlebar.

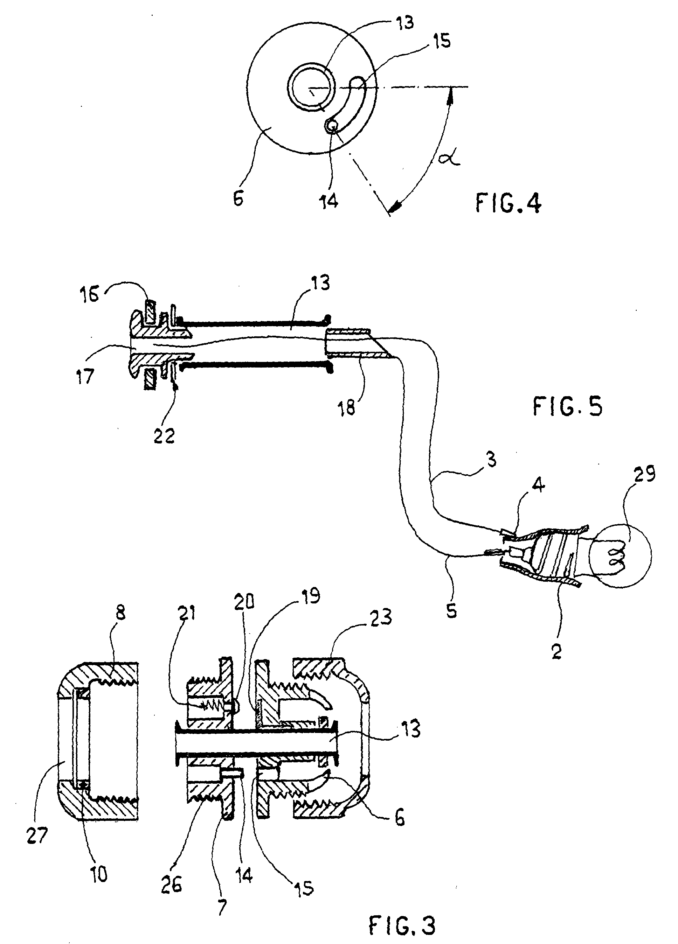

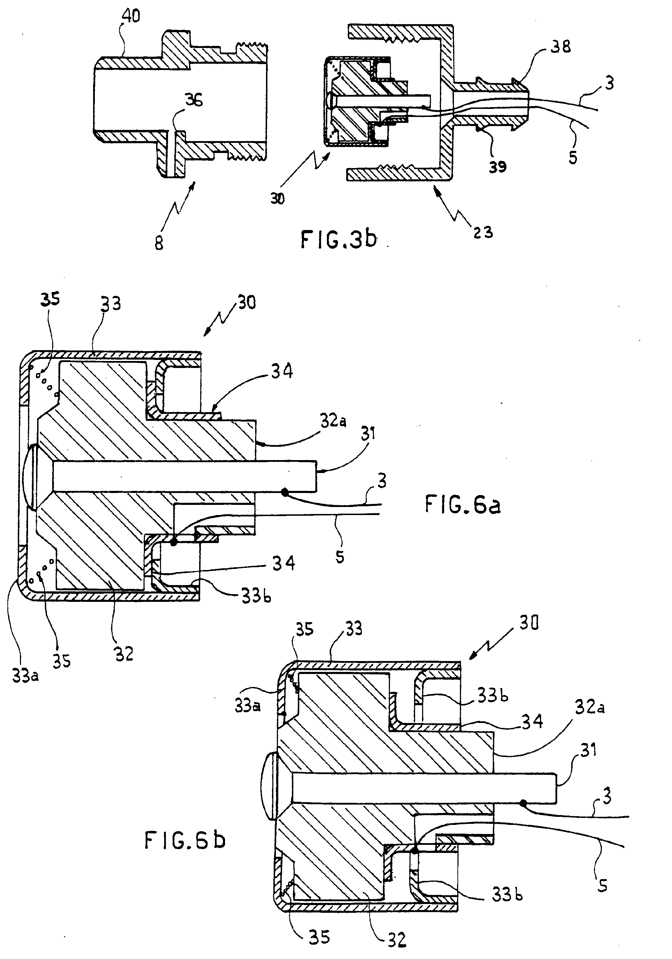

According to an alternative embodiment, shown in figure 3b, the ring nut 8 is tightened directly, by means of threading, onto the supporting ring nut 23.

In this case the electric continuity is guaranteed by a switching device 30, shown in figures 3b, 6a and 6b, operated by relative angular sliding of the two ring nuts 8 and 23.

In detail, the switching device 30 comprises a conducting rod 31 to make permanent contact between one polarity of the lamp, by means of the conductor 3, and the positive polarity of the batteries 11.

The conducting rod 31 crosses the insulating body 32 joined to and coaxial with it to come into permanent contact with the positive polarity of the batteries 11.

The insulating body 32 is capable of moving inside a conducting sheath 33 of a suitable size.

The conducting sheath 33 guarantees, in its front portion 33a, electric continuity to the metal structure 12 containing the batteries.

By turning the two ring nuts in opposite directions from each other the rear portion 33b of the conducting sheath 33 comes into contact with a conducting element 34 located on the insulating body 32 and in turn in contact, by means of the conductor 5, with the other polarity of the lamp 29.

When the two ring nuts 8, 23 are completely clamped one over the other, the supporting ring nut 23, acting on the portion 32a of the insulating body, projecting from the conducting sheath 33, moves the insulating body 32 deactivating the contact between conducting element and conducting sheath (see figure 6b).

On the contrary, with slight rotation of the two ring nuts 8, 23, increasing the distance between these, the insulating body 32, by the action of two elastic elements 35, such as two springs, moves in the opposite direction to its previous movement activating the contact between conducting element-conducting sheath (see figure 6b).

In this embodiment, the ring nut 8 has a threaded pin (not shown) that slides in a specific seat 36 positioned radially to the ring nut to block by contrast the handlebar of the bicycle when the handlebar is fitted in the cylindrical element 40.

Advantageously, according to this particular embodiment, the ring nut 23 has a projecting lip 38 equipped with projecting parts or teeth 39 to engage and block the flexible element 25.

The profile of the flexible element 25 may differ depending on the handlebar on which it is to be fitted.

In fact, in an alternative embodiment, through rotation said flexible element 25 can project beyond the contour of the cyclist to be visible. In this case, rotation of the ring nut 23 can actuate switching on and outward movement of the lamp.

Flashing of the lamp may be attained with a special flashing lamp or, alternatively, by an electronic circuit or by means of a flashing device such as a bimetal.

## Claims

1. Flashing light or luminous direction indicator for bicycles, **characterised in that** it comprises a flexible element (25) fixed at the end of which is a luminous part (1), operated electrically and projecting from the handgrip (24) of the handlebar (9) of the bicycle, beyond the contour of the cyclist.

2. Indicator as claimed in claim 1, **characterised in that** said element (25) is joined to a rotating ring nut (23) acting both to fasten it to said handgrip (24), and as a rotating control to switch on and off said luminous part (1).

3. Indicator as claimed in one or more of the previous claims, **characterised in that** it comprises two ring nuts placed beside each other coaxially (8, 23), one (8) of which is equipped with means for fixing to the end of the handgrip (24) of the handlebar (9) and the other (23) comprising supporting means for said flexible element (25).

4. Indicator as claimed in claim 3, **characterised in that** the ring nut (8) for fixing to the handlebar has a specific hole (27) or a cylindrical element (40) to allow the handlebar to be fitted.

5. Indicator as claimed in claims 3 and 4, **characterised in that** said ring nut (8) also is provided with a thread onto which the corresponding thread (26) of a fixed support (7) is screwed.

6. Indicator as claimed in one or more of the previous claims, **characterised in that** said fixed support (7) is housed coaxially together with a rotating support (6), by means of a rigid metal tube (13) with a structural function and functioning as an electric conductor.

7. Indicator as claimed in one or more of the previous claims, **characterised in that** said rotating support (6) is provided with a groove (15) and a contact (19) rubbing on said tube (13).

8. Indicator as claimed in one or more of the previous claims, **characterised in that** said fixed support (7) is equipped with a pin (14) suitable for being housed in said groove (15) of the rotating support (6) and hence to define the angle of rotation (α).

9. Indicator as claimed in one or more of the previous claims, **characterised in that** it is also provided with a fixed contact (20) fitted on said support (7) and with the function of actuating continuity of the electric circuit supplying power to the luminous part (1), in the position in which this contact (20) is facing said rubbing contact (19) of the rotating support (6).

10. Indicator as claimed in claim 9, **characterised in that** said fixed contact (20) is provided with a conducting elastic element of the rubbing type (21) that guarantees electric continuity with the terminal of the metal braid acting as container of the batteries (11) or similar.

11. Indicator as claimed in claim 9, **characterised in that** said container (12) of said batteries (11) is in the form of a flexible metal braid, so that it can be adapted to different types of handlebar.

12. Indicator as claimed in claim 10, **characterised in that** it is provided with a conductor (5) passing inside said tube (13) and which provides permanent electric continuity, in relation to the positive polarity, by means of a conductor terminal (17), appropriately insulated by the metal tube (13) and which rubs on the positive pole of the batteries (11) or similar.

13. Indicator as claimed in any of the claims from 1 to 4, **characterised in that** it comprises a switching device operated by angular slide of the two ring nuts (8, 23).

14. Bicycle, **characterised in that** it comprises a handlebar provided with at least one direction indicator or flashing light as claimed in one or more of the claims from 1 to 13.

15. Bicycle as claimed in claim 14, **characterised in that** the handgrips (24) of said handlebar (9) have respective seats (28) for housing said flexible metal braid (12) for the batteries (11) to supply power to the luminous part (1) of said direction indicator (flashing light).
